## Europäisches Patentamt

(19) **European Patent Office**

**Office européen des brevets**

(11) Veröffentlichungsnummer: **0 084 078**

**B1**

# (12) EUROPÄISCHE PATENTSCHRIFT

(45) Veröffentlichungstag der Patentschrift:
03.09.86

(51) Int. Cl.⁴: **A 61 C 5/06**

(21) Anmeldenummer: **82104282.7**

(22) Anmeldetag: **15.05.82**

(54) **Einrichtung zum Aufbewahren und Vibrationsmischen der Komponenten von Amalgamen für Dentalzwecke.**

(30) Priorität: **19.01.82 CH 304/82**

(43) Veröffentlichungstag der Anmeldung:
**27.07.83 Patentblatt 83/30**

(45) Bekanntmachung des Hinweises auf die Patenterteilung:
**03.09.86 Patentblatt 86/36**

(84) Benannte Vertragsstaaten:
**DE FR GB IT NL SE**

(56) Entgegenhaltungen:
**DE-A-2 831 005**
**DE-A-3 025 526**
**US-A-3 139 181**
**US-A-3 718 235**

**Australian Dental Journal, August 1981, Band 6, no. 4, Seiten 236-243**

(73) Patentinhaber: **Coltène AG, Feldwiesenstrasse 20, CH- 9450 Altstätten (SG) (CH)**

(72) Erfinder: **Müller, Hans, Mühlackerstrasse 80, CH- 9436 Balgach (CH)**
Erfinder: **Jaecklin, Alexander Peter, Neugass 64, CH- 9442 Berneck (CH)**
Erfinder: **( )**

(74) Vertreter: **Ryffel, Rolf, c/o Hepp Ryffel AG Bahnhofstrasse 58, CH- 8001 Zürich (CH)**

## Beschreibung

Die Erfindung betrifft eine Einrichtung zum Aufbewahren und Vibrationsmischen der Komponenten von Amalgamen für Dentalzwecke.

Es ist eine Kapsel zum getrennten Aufbewahren und Vibrationsmischen von Amalgamkomponenten bekannt (US-A- 3 139 181), die einen im wesentlichen zylindrischen, den Mischraum enthaltenden unteren Kapselteil und einen oberen Teil zum Lagern der ersten Komponente aufweist. Im Mischraum befinden sich die zweite Komponente sowie ein Pistill. Unmittelbar vor der Vermischung der Komponenten wird die erste Komponente durch eine Schraubbewegung des oberen Kapselteils in den Mischraum gebracht. Danach wird die Kapsel in den Vibrationsmischer eingesetzt, der die Kapsel in ihrer Längsrichtung mit hoher Frequenz hin- und herbewegt, wobei die zweite Komponente mit der ersten Komponente ein homogenes Gemisch bildet. Nachteilig an dieser bekannten Mehrkomponentenkapsel ist, dass vor dem Mischen eine besondere Manipulation zum Ueberführen der ersten Komponente in den Mischraum notwendig ist.

Es ist ferner bekannt (DE-A- 28 31 005), eine der beiden getrennt aufzubewahrenden und anschliessend Zumischenden Komponenten innerhalb eines Folienbeutels im Mischraum unterzubringen, der die andere Komponente frei enthält. Bei der Mischvibration wird der Folienbeutel zerstört, so dass die darin enthaltene Komponente freigesetzt wird und mit der anderen Komponente gemischt werden kann. Die Anordnung hat den Vorteil, dass eine besondere Manipulation zum Ueberführen der einen Komponente in den Mischraum nicht erforderlich ist. Jedoch ist das Einfüllen der Komponente in den Folienbeutel nicht problemlos. Insbesondere ist es unmöglich, die Verschweissung mit konstantem und minimalstem Kopfraumleervolumen vorzunehmen. Dadurch wird der Zeitpunkt des Aufplatzens während des Vibrationsvorgangs stark beeinflusst, und es ist schwierig, in vorgeschriebener Mischzeit eine konstant gute Mischung zu erhalten. Auch ist es möglich, dass Teile des zerstörten Folienbeutels in das gebildete Amalgam gelangen und dieses verunreinigen.

Es ist ausserdem eine ähnliche Kapsel vorgeschlagen worden (DE-A-30 25 526), bei welcher die die beiden Komponenten in der Kapsel trennende Einrichtung von einer Wand gebildet wird, die den Mischraum in zwei Abteilungen auftrennt und die nahe ihrem Uebergang zur Mischrauminnenfläche eine von der Mischvibration zerstörbare Verbindungsstelle aufweist. Die Trennwand kann vorzugsweise aus einem weichelastischen Werkstoff, z.B. Silikongummi bestehen. Diese Kapsel hat jedoch den Nachteil, dass es schwierig ist, den Zeitpunkt der Oeffnung der Verbindungsstelle der Trennwand richtig zu steuern.

Die beiden letzgenannten Kapseln haben ferner beide den Nachteil, dass bei ihnen kein Pistill verwendbar ist und somit die zweite Komponente nur in Pulverform und nicht in Tablettenform eingesetzt werden kann. Bei Amalgamen für Dentalzwecke, wo die erste Komponente aus Quecksilber und die zweite aus einer Silberlegierung besteht, ist es jedoch sehr vorteilhaft, die letztere in Tablettenform einzusetzen, was bekanntlich eine bessere Dosierung dieser Komponente erlaubt.

Der Erfindung liegt daher die Aufgabe zugrunde, eine Einrichtung zum Aufbewahren und Vibrationsmischen der Komponenten von Amalgamen für Dentalzwecke zu schaffen, mit welchen sich die genannten Nachteile der bekannten Kapseln vermeiden lassen.

Die erfindungsgemässe Lösung der Aufgabe ist im kennzeichnenden Teil von Anspruch 1 enthalten. Die Ansprüche 2 - 16 enthalten bevorzugte Ausbildungen der Einrichtung.

Die erfindungsgemässe Einrichtung hat den Vorteil, dass einerseits vor dem Mischen der Komponenten keine besondere Manipulation zum Ueberführen der einen Komponente in den Mischraum erforderlich ist und andererseits ein Pistill vorhanden ist, welches die Verwendung der anderen Komponente auch in Tablettenform erlaubt. Da die Vermischung der Komponenten infolge innerer Reibung mit einer starken Wärmeentwicklung verbunden ist, kann ein Pistill mit Metalldeckel für eine gute Wärmeableitung sorgen. Diese Anordnung bringt auch ein höheres Gewicht, was sich vorteilhaft auf die Zerkleinerung der Tablette auswirkt. Ferner ist das im Pistill vorhandene Quecksilber im doppelten Behälter (Pistill und Mischraumkapsel sehr gut aufbewahrt und ist gegen Oxydation gut geschützt; auch im Falle einer unwahrscheinlichen Undichtigkeit der Dichtung bleibt das Quecksilber in der Mischraumkapsel und kann nicht zu Verschmutzungen auf dem Transport oder Lagerung führen.

Eine Einrichtung zum Aufbewähren von Mischungskomponenten, in der die eine Komponente in einem im Inneren eines Aussenbehälters angeordneten Innenbehälter eingeschlossen ist, welcher eine durch Schütteln des Aussenbehälters freigebbare Oeffnung aufweist, ist an sich aus der US-A- 3 718 235 bekannt. In dieser bekannten Einrichtung sind die beiden Mischungskomponenten Flüssigkeiten, die einerseits den Innenbehälter und anderseits den Aussenbehälter weitgehend ausfüllen. Der Innenbehälter ist im Aussenbehälter festgehalten. Er kann nicht im Aussenbehälter umhergeschleudert werden und gegen dessen Wände prallen. Der Aussenbehälter enthält keine feste Amalgamkomponents, und der Innenbehälter kann auch nicht als Pistill wirken. Beim Schütteln des Aussenbehälters werden zwar ein den Innenbehälter verschliessensr Deckel und eine im Innenbehälter enthaltene Kugel vom Innenbehälter gelöst und sind dann im Aussenbehälter frei beweglich. Diese vom Innenbehälter getrennten Teile haben aber auch nicht die Aufgabe, als Misch- und Reibhilfe im Sinne eines Pistills zu wirken, und sie wären dazu auch nicht geeignet, weil sie im Vergleich zur Grösse des Aussenbehälters viel zu klein bzw. unförmig sind.

Einige Ausführungsbeispiele der Erfindung sind nachfolgend anhand der Figuren der Zeichnung näher erläutert. Es zeigen:

Fig. 1 die erfindungsgemässe Einrichtung im Mittellängsschnitt,

Fig. 2 das Pistill im Mittellängsschnitt in vergrösserter Darstellung,

Fig. 2a eine Variante der Ausführung des Pistills gemäss Fig. 2 im Mittellängsschnitt,

Fig. 2b eine weitere Variante der Pistillausführung gemäss Fig. 2 im Mittellängsschnitt,

Fig. 3 einen Mittellängsschnitt durch eineandere Ausführungsform des Pistills,

Fig. 3a einen Querschnitt gemäss Linie A - A in Fig. 3,

Fig. 3b eine Variante der Pistillausführung gemäss Fig. 3 im Mittellängsschnitt,

Fig. 4 einen Mittellängsschnitt durch eine dritte Ausführungsform des Pistills und

Fig. 4a einen Querschnitt gemäss Linie B - B in Fig. 4.

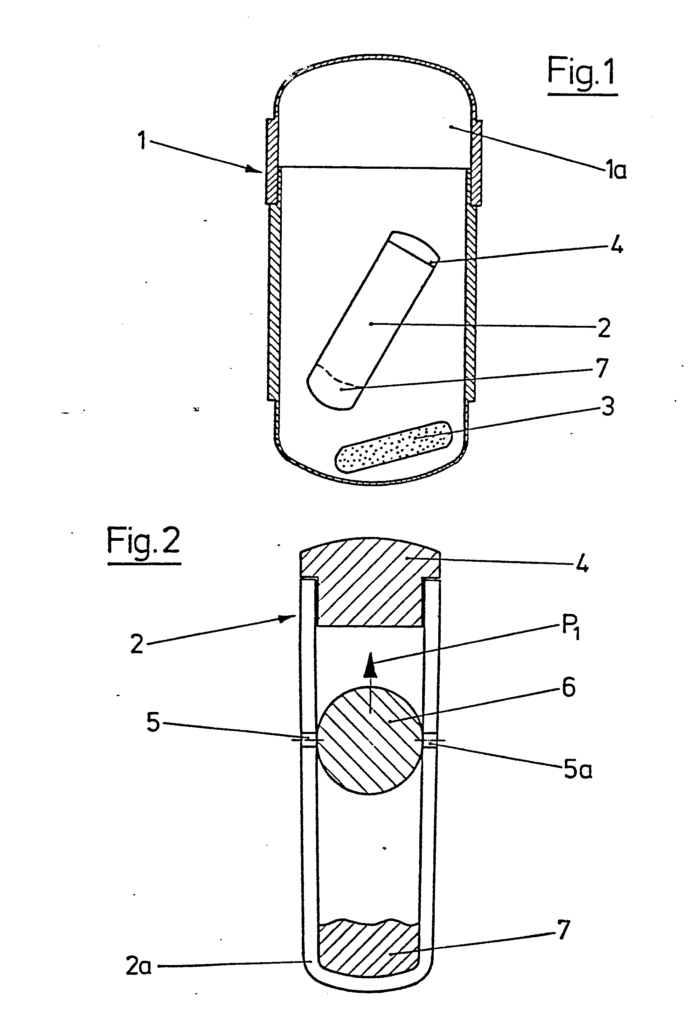

Gemäss Fig. 1 enthält die erfindungsgemässe Einrichtung eine übliche zylindrische, mit einem Deckel 1a verschliessbare Kunststoffkapsel 1, deren Innenraum den Mischraum bildet, in welchem ein als Hohlkörper ausgebildetes Pistill 2 und die eine Komponente des Amalgams in Form einer Tablette 3 vorhanden sind.

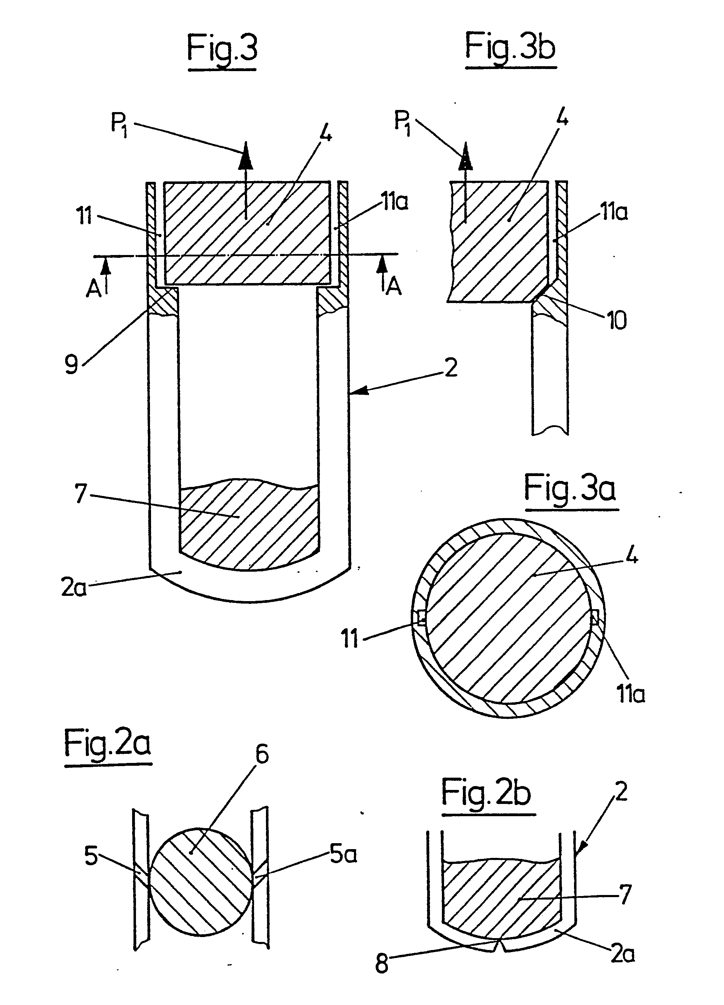

Wie aus Fig. 2 ersichtlich, besteht das Pistill 2 aus einem im wesentlichen zylindrischen, aber gegen den linsenförmig gewölbten Boden 2a hin konisch etwas verengten Hohlkörper aus Kunststoff, z.B. Polyäthylen. Der teleskopartig in das offene Ende des Hohlkörpers einschiebbare Deckel 4 besteht aus Metall, vorzugsweise Stahl, und ist ebenfalls linsenförmig gewölbt. An der Zylinderwand sind zwei einander diametral gegenüberliegende Oeffnungen 5, 5a vorhanden, welche im Ruhezustand durch eine kugelförmige Dichtung 6 aus einem elastischen Werkstoff, z.B. Gummi, verschlossen werden. Die Dichtung 6 kann aber auch Scheibenform haben.

Beim Füllen des Pistills 2 wird zunächst das Quecksilber 7 eingebracht, danach die Dichtung 6 eingedrückt und abschliessend der Deckel 4 aufgesetzt.

Bei der Benützung wird das Pistill 2 zusammen mit der Tablette 3 in die Kapsel I eingebracht und letztere in irgendeinen handelsüblichen Vibrationsmischer gespannt. Bei der Vibration wird das Pistill 2 in Längsrichtung der Kapsel 1 hin- und herbewegt und prallt dabei gegen die Kapselwände. Dabei wird die Dichtung 6 in Richtung des Pfeils P$_1$ bewegt und gibt die Oeffnungen 5, 5a frei, so dass das Quecksilber austritt und in den Innenraum der Kapsel 1 gelangt. Gleichzeitig zerkleinert das Pistill 2 die Tablette 3, so dass die darin enthaltene Silberlegierung freigesetzt wird und sich mit dem Quecksilber homogen vermischt.

Bei der Variante gemäss Fig: 2a verlaufen die Oeffnungen 5, 5a in der Zylinderwand des Pistills 2 unter einem spitzen Winkel zur Pistillachse, wodurch der Austritt des Quecksilbers erleichtert werden kann.

Bei der weiteren Variante gemäss Fig. 2b ist im Boden 2a des Pistills 2 eine Sollbruchstelle 8 in Form einer linien- oder kreuzförmigen Einkerbung vorhanden, welche bei der Vibrationsbewegung durch das Aufprallen des Pistills 2 auf die Kapselwände bricht und den Austritt des Quecksilbers ermöglicht.

Bei der Ausführungsform des Pistills gemäss den Figuren 3, 3a ist der in das offene Ende des Hohlkörpers einschiebbare Deckel 4 am oberen Ende eben ausgebildet und die Innenseite der Hohlkörperwand ist mit zwei einander gegenüberliegenden kanülenförmigen, parallel zur Pistillachse verlaufenden Oeffnungen 11, 11a versehen. Der Deckel 4 sitzt im Ruhezustand auf einer horizontal verlaufenden Dichtung 9. Bei der Vibrationsbewegung wird der Deckel 4 durch das Aufprallen des Pistills 2 auf die Kapselwände in Richtung des Pfeiles P$_1$ leicht angehoben, wodurch der Austritt des Quecksilbers durch die Oeffnungen 11, 11a ermöglicht wird.

Bei der Variante gemäss Fig. 3b ist der Deckel 4 am unteren Ende konisch ausgebildet und sitzt auf einer ebenfalls konischen Dichtung 10. Dadurch kann der Austritt des Quecksilbers erleichtert werden.

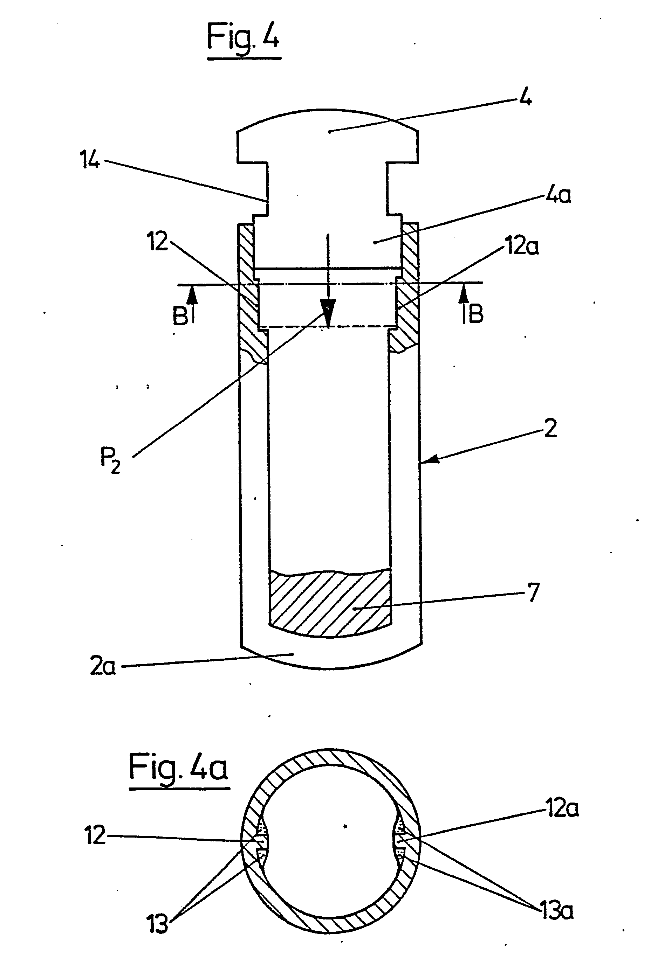

Bei der dritten Ausführungsform des Pistills 2 gemäss den Figuren 4, 4a ist das offene Ende des Hohlkörpers an seiner Innenwand mit zwei einander gegenüberstehenden Rippen 12, 12a mit rechteckigem Querschnitt versehen. Der Deckel 4 besteht aus gummielastischem Material und ist im Mittelteil mit einer Einschnürung 14 versehen. Bei der Vibrationsbewegung wird der Teil 4a des Deckels 4 durch das Aufprallen auf die Kapselwände in der Richtung des Pfeils P$_2$ soweit in das offene Ende des Hohlkörpers eingedrückt, dass er wie aus Fig. 4a ersichtlich durch die Rippen 12, 12a gequetscht wird. Dabei bilden sich die Oeffnungen 13, 13a, durch welche das Quecksilber in den Bereich der Einschnürung 14 und von hier in den Mischraum gelangen kann.

Anstatt eines wenigstens teilweise aus gummielastischem Material bestehenden Deckels 4 kann auch ein Deckel aus festem Material, z.B. aus Metall, verwendet werden, welcher im Teil 4a eine Ringnut aufweist, in welche ein O-Ring aus gummielastischem Material eingelegt ist, der durch die Rippen 12, 12a gequetscht wird.

## Patentansprüche

1. Einrichtung zum Aufbewahren und Vibrationsmischen der Komponenten von Amalgamen für Denialzwecke, mit einem die eine, feste Komponente (3) sowie ein frei bewegliches Pistill (2) enthaltenden, von diesen Elementen (3, 2) nur zu einem kleineren Teil ausgefüllten Mischraum (1), dadurch gekennzeichnet, dass das Pistill (2) als die andere, flüssige Komponente (7) enthaltender Hohlkörper ausgebildet ist, welcher mit einem aufgesteckten Deckel (4) versehen ist und mindestens eine den Austritt dieser anderen Komponente (7) ermöglichende Oeffnung aufweist, die durch Stösse beim Aufprallen des Pistills (2) auf die Mischraumwände bei der Durchführung einer Misch-Vibrationsbewegung des Mischraums (1) freigebbar ist.

2. Einrichtung nach Anspruch 1, dadurch gekennzeichnet, dass das Pistill (2) im wesentlichen zylinderförmig ausgebildet ist.

3. Einrichtung nach Anspruch 2, dadurch gekennzeichnet, dass das Pistill (2) aus einem gegen den Boden (2a) hin konisch verengten Hohlkörper besteht.

4. Einrichtung nach den Ansprüchen 1 und 2, dadurch gekennzeichnet, dass die Oeffnung(en) (5, 5a) im Pistill (2) senkrecht zu dessen Achse verläuft bzw. verlaufen.

5. Einrichtung nach den Ansprüchen 1 und 2, dadurch gekennzeichnet, dass die Oeffnung(en) (5, 5a) im Pistill (2) unter einem spitzen Winkel zu dessen Achse verläuft bzw. verlaufen.

6. Einrichtung nach den Ansprüchen 1 und 2, dadurch gekennzeichnet, dass die Oeffnung(en) (11, 11a, 13, 13a) parallel zur Pistillachse verläuft bzw. verlaufen.

7. Einrichtung nach den Ansprüchen 1 bis 6, dadurch gekennzeichnet, dass eine die Oeffnung(en) im Ruhezustand verschliessende Dichtung (4a, 6, 9, 10) vorhanden ist bzw. sind.

8. Einrichtung nach den Ansprüchen 4, 5, 7, dadurch gekennzeichnet, dass die die Oeffnung(en) (5, 5a) verschliessende Dichtung (6) Kugelform hat.

9. Einrichtug nach den Ansprüchen 4, 5, 7, dadurch gekennzeichnet, dass die die Oeffnung(en) (5, 5a) verschliessende Dichtung Scheibenform hat.

10. Einrichtung nach den Ansprüchen 7 bis 9, dadurch gekennzeichnet, dass die Dichtung (6) aus einem elastischen Werkstoff besteht.

11. Einrichtung nach Anspruch 1, dadurch gekennzeichnet, dass der Boden (2a) und der Deckel (4) des Pistills (2) linsenförmig gewölbt sind.

12. Einrichtung nach Anspruch 1, dadurch gekennzeichnet, dass der Hohlkörper des Pistills (2) aus Kunststoff und der Deckel (4) aus Metall besteht.

13. Einrichtung nach den Ansprüchen 1 und 2, dadurch gekennzeichnet, dass der Boden (2a) des Pistills eine Sollbruchstelle (8) in Form einer linien- oder kreuzförmigen Einkerbung aufweist.

14. Einrichtung nach den Ansprüchen 1 und 2, dadurch gekennzeichnet, dass der Deckel (4) des Pistills (2) auf einer Dichtung (9) sitzt und durch die Stösse beim Aufprallen des Pistills (2) auf die Mischraumwände von dieser Dichtung (9) soweit abhebbar ist, dass mindestens eine an der Innenseite der Hohlkörperwand vorhandene kanülenförmige Oeffnung (11, 11a) freigegeben wird.

15. Einrichtung nach den Ansprüchen 1 und 2, dadurch gekennzeichnet, dass wenigstens der untere Teil (4a) des Deckels (4) des Pistills (2) aus gummielastischem Material besteht und durch die Stösse beim Aufprallen des Pistills (2) auf die Mischraumwände in das offene Ende des Hohlkörpers eindrückbar und an mindestens einer, an der Innenseite der Hohlkörperwand vorhandenen Rippe (12, 12a) derart quetschbar ist, dass sich Austrittsöffnungen (13, 13a) bilden.

16. Einrichtung nach Anspruch 1, gekennzeichnet durch die Verwendung des Hohlkörper-Pistills (2) für eine spezifisch schwere Flüssigkeit, insbesondere Quecksilber.

**Claims**

1 Appliance for storing and mixing by vibration the components of amalgams for dental use, including a mixing space (1) which contains one of the components (3), this component being solid, and also contains a freely movable pestle (2), these elements (3, 2) filling only a minor portion of the mixing space, characterised in that the pestle (2) is in the form of a hollow body which contains the other, liquid component (7), the hollow body being provided with an attached cover (4) and including at least one opening which permits exit of the other component (7) and which is rendered passable as a result of impacts when the pestle (2) collides with the mixing space walls during the execution of a mixing vibration movement of the mixing space (1).

2. Appliance according to claim 1, characterised in that the pestle (2) is generally cylindrical in shape.

3. Appliance according to claim 2, characterised in that the pestle (2) comprises a hollow body which narrows in a conical fashion in the direction toward its bottom (2a).

4. Appliance according to claims 1 and 2, characterised in that the opening(s) (5, 5a) in the pestle (2) runs or run perpendicular to the axis of the pestle.

5. Appliance according to claims 1 and 2, characterised in that the opening(s) (5, 5a) in the pestle (2) runs or run at an acute angle to the axis of the pestle.

6. Appliance according to claims 1 and 2, characterised in that the opening(s) (11, 11a, 13, 13a) runs or run parallel to the axis of the pestle.

7. Appliance according to claims 1 to 6, characterised in that a seal (4a, 6, 9, 10) is provided for closing off the opening(s) in the rest state.

8. Appliance according to claims 4, 5, 7, characterised in that the seal (6) which closes off the opening(s) (5, 5a) is spherical in shape.

9. Appliance according to claims 4, 5, 7, characterised in that the seal which closes off the opening(s) (5, 5a) has a disc shape.

10. Appliance according to claims 7 to 9, characterised in that the seal (9) is comprised of an elastic material.

11. Appliance according to claim 1, characterised in that the bottom (2a) and the cover (4) of the pestle (2) are curved in the fashion of a lens.

12. Appliance according to claim 1, characterised in that the hollow body of the pestle (2) is of plastic, and the cover (4) is of metal.

13. Appliance according to claims 1 and 2, characterised in that the bottom (2a) of the pestle has a prearranged locus of breakage (8) comprising a groove or scoring in the form of a line or cross.

14. Appliance according to claims 1 and 2, characterised in that the cover (4) of the pestle (2) rests against a seal (9) and can be moved away from the seal (9) under the influence of the impacts occurring when the pestle (2) collides with the mixing space walls such that at least one channel-shaped opening (11, 11a) provided on the interior side of the wall of the hollow body is rendered passable.

15. Appliance according to claims 1 and 2, characterised in that at least the lower portion (4a) of the cover (4) of the pestle (2) is comprised of a rubberoid elastic material and can, under the influence of the impacts occurring when the pestle (2) collides with the mixing space walls, be pushed into the open end of the hollow body and compressed and pinched by at least one ridge (12, 12a) provided on the interior side of the wall of the hollow body such that exit openings (13, 13a) are formed.

16. Appliance according to claim 1, characterised in that the hollow body pestle (2) is employed for a high specific gravity liquid, particularly mercury.

**Revendications**

1. Dispositif pour conserver et pour mélanger par vibrage les composants d'amalgames pour usages dentaires, comprenant une chambre de mélange (1) qui contient l'un des composants, solide (3), ainsi qu'un petit pilon (2) pouvant se mouvoir librement, et qui n'est remplie que très partiellement par ces éléments (3, 2), caractérisé en ce que ledit pilon (2) est constitué par un corps creux contenant l'autre composant (7) lequel est liquide, dans lequel est emboîté un couvercle (4) et qui présente au moins une ouverture permettant à cet autre composant (7) de s'échapper, ouverture qui peut être ouverte par les chocs dus aux impacts du pilon (2) contre les parois de la chambre de mélange pendant que sont imprimés des mouvements de vibrage et de mixtion à la chambre de mélange (1).

2. Dispositif selon la revendication 1, caractérisé en ce que le pilon (2) a essentiellement une forme cylindrique.

3. Dispositif selon la revendication 2, caractérisé en ce que le pilon (2) est constitué par un corps creux rétrécissant en cône en direction de son fond (2a).

4. Dispositif selon les revendications 1 et 2, caractérisé en ce que la ou les ouvertures (5, 5a) du pilon (2) s'étendent perpendiculairement à son axe.

5. Dispositif selon les revendications 1 et 2, caractérisé en ce que la ou les ouvertures (5, 5a) du pilon font un angle aigu avec l'axe de celui-ci.

6. Dispositif selon les revendications 1 et 2, caractérisé en ce que la ou les ouvertures (11, 11a, 13, 13a) s'étendent parallèlement à l'axe du pilon.

7. Dispositif selon les revendications 1 à 6, caractérisé en ce qu'un élément d'étanchéité (4a, 6, 9, 10) est prévu pour fermer la ou les ouvertures au repos.

8. Dispositif selon les revendications 4, 5 et 7, caractérisé en ce que l'élément d'étanchéité (6) fermant la ou les ouvertures (5, 5a) a une forme sphérique.

9. Dispositif selon les revendications 4, 5 et 7, caractérisé en ce que l'élément d'étanchéité fermant la ou les ouvertures (5, 5a) a la forme d'un disque.

10. Dispositif selon l'une quelconque des revendications 7 à 9, caractérisé en ce que l'élément d'étanchéité (6) est en matière élastique.

11. Dispositif selon la revendication 1, caractérisé en ce que le fond (2a) et le couvercle (4) du pilon (2) ont une courbure lenticulaire.

12. Dispositif selon la revendication 1, caractérisé en ce que le corps creux du pilon (2) est en une matière plastique, tandis que son couvercle (4) est en métal.

13. Dispositif selon les revendications 1 et 2, caractérisé en ce que le fond (2a) du pilon présente un point faible de rupture (8) constitué par une encoche linéaire ou en croix.

14. Dispositif selon les revendications 1 et 2, caractérisé en ce que le couvercle (4) du pilon (2) repose sur un élément d'étanchéité (9) et en ce que, sous l'action des chocs dus aux impacts du pilon (2) contre les parois de la chambre de mélange, il peut s'écarter de cet élément d'étanchéité (9) au point de découvrir une ouverture en forme de canule (11, 11a) formée dans la face intérieure de la paroi du corps creux du pilon.

15. Dispositif selon les revendications 1 et 2, caractérisé en ce que au moins la partie inférieure (4a) du couvercle (4) du pilon (2) est en une matière élastique, et en ce que les chocs dus aux impacts du pilon (2) contre les parois de la chambre de mélange peuvent refouler cette partie inférieure dans l'extrémité ouverte du corps creux du pilon, contre au moins une nervure (12, 12a) prévue sur la face intérieure de ladite paroi de manière à former des ouvertures d'échappement (13, 13a).

16. Dispositif selon la revendication 1, caracrérisé par l'application du pilon creux (2) pour un liquide ayant un poids spécifique élevé, notamment, pour le mercure.

Fig.1

Fig.2

Fig.3   Fig.3b   Fig.3a   Fig.2a   Fig.2b

## Fig. 4

## Fig. 4a